# EUROPEAN PATENT SPECIFICATION

(11) **EP 4 372 224 B1**
(45) Date of publication and mention of the grant of the patent: **25.02.2026**
(21) Application number: 23207665.3
(22) Date of filing: 03.11.2023
(51) Int. Cl.: F02M 35/04, B01D 46/62, F02M 35/08, F02M 35/10, F02M 35/16, B01D 46/10, B01D 46/24

(54) **STRADDLED VEHICLE**
GRÄTSCHSITZFAHRZEUG
VÉHICULE À SELLE

(30) Priority: 18.11.2022 JP 2022185048
(43) Date of publication of application: 22.05.2024
(73) Proprietor: Yamaha Hatsudoki Kabushiki Kaisha, Iwata-shi, Shizuoka 438-8501 (JP)
(72) Inventor: UCHISAWA, Akinori, Iwata-shi, 438-8501 (JP); OKUNO, Shota, Iwata-shi, 438-8501 (JP); SHIRAISHI, Naoya, Iwata-shi, 438-8501 (JP)
(74) Representative: Studio Torta S.p.A.

(56) References cited:
- EP-A1- 3 599 149
- EP-A2- 0 441 461
- US-A1- 2004 187 828
- US-A1- 2005 133 289
- US-A1- 2007 044 748
- US-A1- 2010 078 239
- US-B1- 6 287 354

## Description

### BACKGROUND

### Technical Field

The present invention relates to a straddled vehicle including an engine and an air cleaner.

### Prior Art

An air cleaner introduces clean air into an engine. During traveling of a straddled vehicle including an engine, an intake sound may be generated in an air cleaner.

In a case in which an intake sound generated in the air cleaner gives a rider a feeling of sprinting, the rider can enjoy driving the straddled vehicle by actively hearing the intake sound. Further, in a case in which an intake sound generated in the air cleaner changes in accordance with the work state of the engine, the rider can perform a throttle operation, a handle operation and the like while identifying the work state of the engine by actively hearing the intake sound.

JP 2019-172097 A describes one example of a straddled vehicle in which an air cleaner box is provided rearwardly of an engine. In the straddle vehicle, an intake port is provided in the sidewall of the air cleaner box. Further, a side cover is provided so as to further cover the intake port in the sidewall of the air cleaner box from the side of the straddled vehicle. In the side cover, a side cover opening for allowing a rider to hear an intake sound generated in the air cleaner is formed.

The side cover opening is formed so as to be directed sidewardly of the vehicle. Therefore, in regard to the straddled vehicle described in JP 2019-172097 A, it is difficult for a rider riding the straddled vehicle to actually hear an intake sound generated in the air cleaner box.
US2004187828, US2005133289, US6287354, EP0441461 and US2007044748 disclose a straddled vehicle according to the preamble of claim 1.

In order to cause a rider to actively hear an intake sound, it is desirable that the intake port of the air cleaner box is arranged at a position close to the head of the rider and the intake port is directed toward the head of the rider, that is, the intake port is directed upwardly. However, with such a configuration, droplets of rainwater or the like are likely to enter the intake port of the air cleaner box.

### Description of the invention

An object of the present invention is to provide a straddled vehicle that enable a rider to efficiently hear an intake sound of an air cleaner while reducing entry of droplets to the air cleaner.

A straddled vehicle according to one aspect of the present invention includes a fuel tank provided at a position forwardly of a seat in the vehicle and above an engine, a tank cover provided so as to cover the fuel tank at least from above, and an air cleaner having an intake port, wherein the intake port is opened upwardly at a position farther downward than the fuel tank and farther rearward than a center of the fuel tank in the vehicle, and one or a plurality of through holes overlapping with the fuel tank in plan view are formed in the tank cover,
wherein when the fuel tank is divided into three equal portions in a vehicle front-and-rear direction in plan view, the one or plurality of through holes overlap with one of a center portion and a rear portion of the fuel tank in plan view, and do not overlap with a front portion of the fuel tank in plan view,
and a sound transmission space is formed between the air cleaner and the tank cover so as to continuously extend from the intake port of the air cleaner to the one or plurality of through holes of the tank cover.

Other features, elements, characteristics, and advantages of the present disclosure will become more apparent from the following description of preferred embodiments of the present disclosure with reference to the attached drawings.

### Brief description of the drawings

Fig. 1 is a side view of a motorcycle according to one embodiment of the present invention;
Fig. 2 is a front view of the motorcycle of Fig. 1;
Fig. 3 is a partially enlarged plan view of the motorcycle with an entire tank cover, a front end portion of a seat and its vicinity in a plan view of Fig. 2 being enlarged;
Fig. 4 is a partially enlarged plan view of the motorcycle showing a tank cover located above an air cleaner being detached;
Fig. 5 is a partially enlarged plan view of the motorcycle showing a fuel tank located above the air cleaner and the seat being detached;
Fig. 6 is a partially enlarged plan view of the motorcycle showing a second shielding member located above the air cleaner being detached;
Fig. 7 is a cross sectional view taken along the line A-A of Fig. 3;
Fig. 8 is a schematic cross sectional view taken along the line B-B of Fig. 3; and
Fig. 9 is a partially enlarged plan view showing the configuration in which the tank cover is detached from the motorcycle not having the second shielding member of Fig. 5.

### Embodiments of the invention

A straddled vehicle according to one embodiment of the present invention will be described below with reference to the drawings. A motorcycle will be described as one example of the straddled vehicle.

### 1. Schematic Configuration of Motorcycle

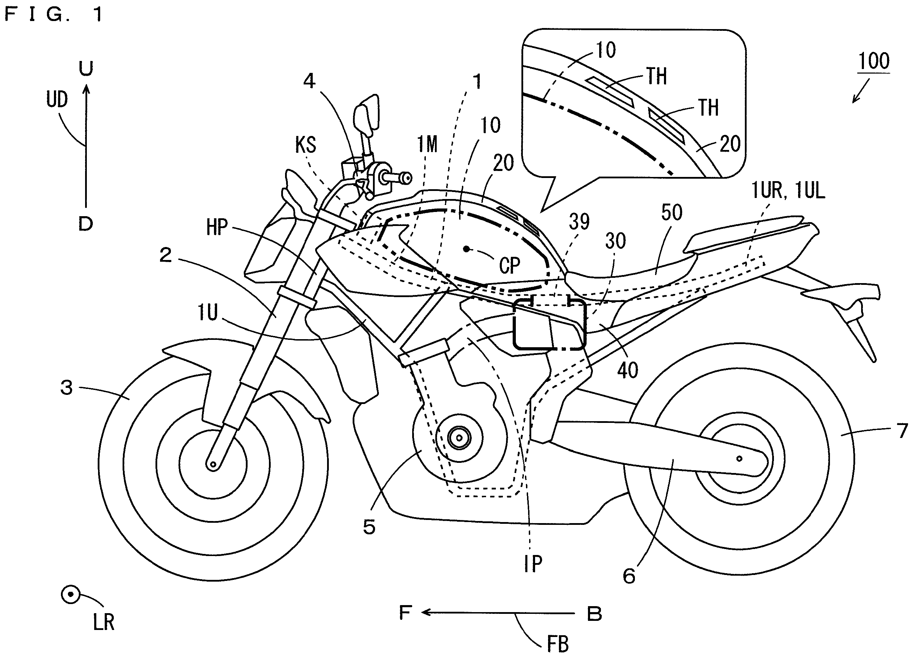

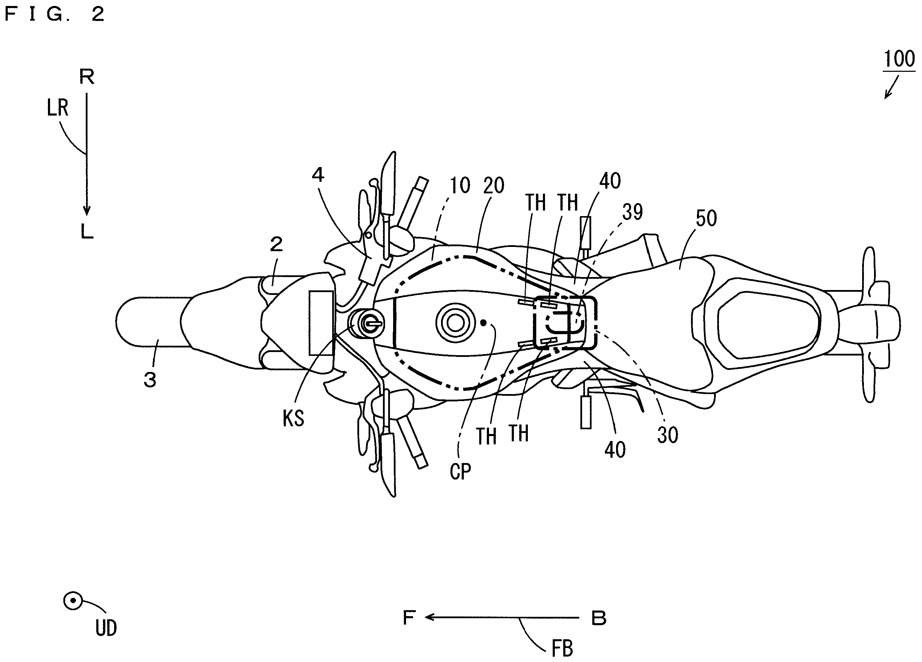

Fig. 1 is a side view of a motorcycle according to one embodiment of the present invention. Fig. 2 is a plan view of the motorcycle 100 of Fig. 1. In Figs. 1 and 2, the motorcycle 100 standing up to be perpendicular to the road surface is shown. In each of Fig. 1 and subsequent given diagrams, a front-and-rear direction FB, a left-and-right direction LR and a top-and-bottom direction UD of the motorcycle 100 are suitably indicated by arrows. The direction in which the arrow is directed in the front-and-rear direction FB is referred to as forward, and its opposite direction is referred to as rearward. Further, the direction in which the arrow is directed in the left-and-right direction LR is referred to as leftward, and its opposite direction is referred to as rightward. Further, the direction in which the arrow is directed in the up-and-down direction UD is referred to as upward, and its opposite direction is referred to as downward. Further, in each of Fig. 1 and subsequent given diagrams, reference characters F, B, L, R, U and D shown together with the arrows indicating directions indicate forward, rearward, leftward, rightward, upward and downward, respectively.

The motorcycle 100 includes a metallic body frame 1. The body frame 1 includes a head pipe HP, a relay frame 1M, a lower frame 1U and a pair of left and right upper rails 1UR, 1UL. The head pipe HP is constituted by the front end portion of the body frame 1. The relay frame 1M is formed to extend rearwardly by a certain distance from the head pipe HP. The left and right upper rails 1UR, 1UL are formed to extend further rearwardly from the rear end portion of the relay frame 1M. The lower frame 1U is formed to extend rearwardly and downwardly from the head pipe HP.

A front fork 2 is provided at the head pipe HP to be rotatable about the center axis of the head pipe HP. A front wheel 3 is rotatably supported at the lower end portion of the front fork 2. A handle 4 is provided at the upper end portion of the front fork 2.

The lower frame 1U supports an engine 5 at a position farther downward than the head pipe HP. A fuel tank 10 is provided to be located upwardly of the engine 5 and rearwardly of the head pipe HP. In Figs. 1 and 2, the fuel tank 10 is indicated by the thick two-dots and dash line. A tank cover 20 made of resin is provided so as to cover the fuel tank 10 from above. The tank cover 20 is formed so as to cover both side portions of the fuel tank 10 in addition to the upper portion of the fuel tank 10.

A key cylinder KS is provided forwardly of the fuel tank 10 so as to be located between the fuel tank 10 and the head pipe HP. On the other hand, a seat 50 is provided rearwardly of the fuel tank 10. The key cylinder KS, the fuel tank 10 and the seat 50 are supported by the body frame 1 and located on the relay frame 1M and the left and right upper rails 1UR, 1UL.

An air cleaner 30 is provided at a position below the fuel tank 10 and the seat 50 and at a position rearward and obliquely upward of the engine 5. In Figs. 1 and 2, the air cleaner 30 is indicated by the thick one-dot and dash line. The air cleaner 30 is supported by the body frame 1 and is connected to an intake port of the engine 5 through an intake pipe IP. A large portion of the air cleaner 30 is located farther downwardly than the left and right upper rails 1UR, 1UL. A pair of left and right side covers 40 are provided so as to mainly cover both of the side portions of the air cleaner 30.

A rear arm 6 is provided so as to extend rearwardly from the lower frame 1U. The rear arm 6 is supported at the lower frame 1U with use of a pivot shaft (not shown). A rear wheel 7 is rotatably supported at the rear end portion of the rear arm 6. The rear wheel 7 is rotated as a drive wheel by motive power generated by the engine 5.

The air cleaner 30 has an intake port 39 into which air to be supplied to the engine 5 is introduced. When air outside of the motorcycle 100 is introduced into an intake port 39 of the air cleaner 30, an intake sound is generated in the intake port 39. As described in "SUMMARY," in a case in which an intake sound is an intake sound that gives a rider the feeling of sprinting, the rider can enjoy driving the motorcycle 100 by hearing the intake sound. Further, in a case in which an intake sound changes in accordance with the work state of the engine 5, a rider can identify the work state of the engine 5 by hearing the intake sound.

As such, in the motorcycle 100 according to the present embodiment, in order to allow the rider to efficiently hear an intake sound generated in the air cleaner 30, the configurations of the air cleaner 30 and its peripheral members are devised.

As such devising, the intake port 39 of the air cleaner 30 according to the present embodiment is located farther downwardly than the fuel tank 10 and farther rearwardly than the center CP of the fuel tank 10 as shown in Fig. 1. In this case, the intake port 39 is located in a portion relatively close to the head of the rider seated on the seat 50 in the motorcycle 100. Further, the intake port 39 of the air cleaner 30 is opened upwardly. In this case, because the head of the rider seated on the seat 50 is located above the intake port 39, the rider easily hears an intake sound output upwardly from the intake port 39.

In the present embodiment, the rider seated on the seat 50 refers to a rider seated in a normal riding posture (a posture that is not largely inclined in the front-and-rear direction or the left-and-right direction) on the seat 50 of the motorcycle 100 that stands up to be perpendicular to the road surface.

Further, in the motorcycle 100 according to the present embodiment, the tank cover 20 is located above the intake port 39 of the air cleaner 30 such that the entire intake port 39 is not exposed to the space above the motorcycle 100. This prevents a large amount of droplets of rainwater or the like from entering the intake port 39. Further, in the tank cover 20, a plurality (four in the present example) of through holes TH for outputting an intake sound generated in the intake port 39 of the air cleaner 30 mainly upwardly of the motorcycle 100 are formed. The configurations of the air cleaner 30 and its peripheral members will be described below in detail.

### 2. Configurations of Air Cleaner 30 and its Peripheral Members

As described above, in the motorcycle 100, a plurality of constituent elements including the fuel tank 10, the tank cover 20 and the seat 50, described above, are supported by the body frame 1 at a position above the air cleaner 30.

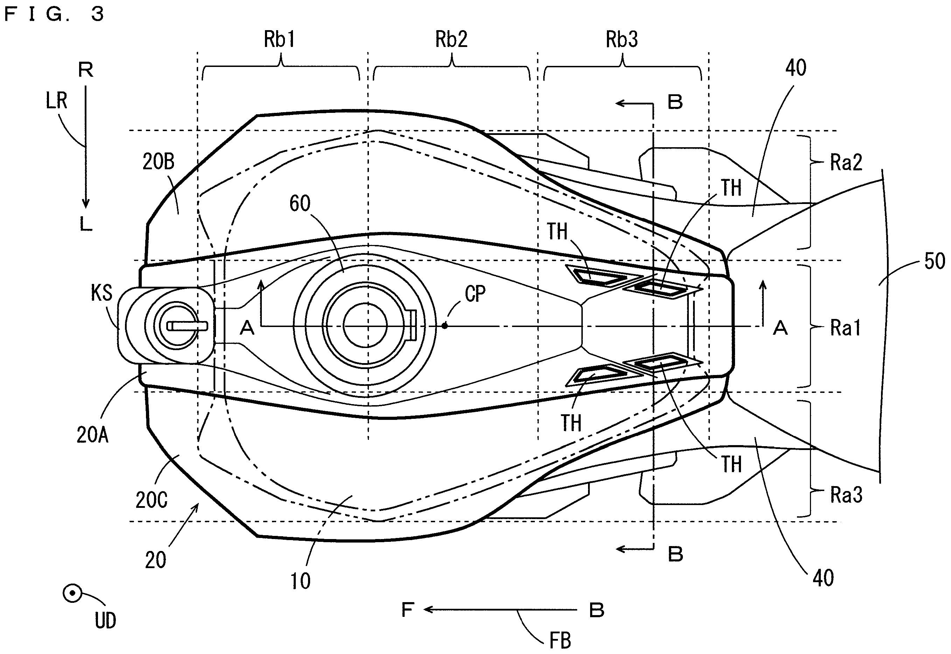

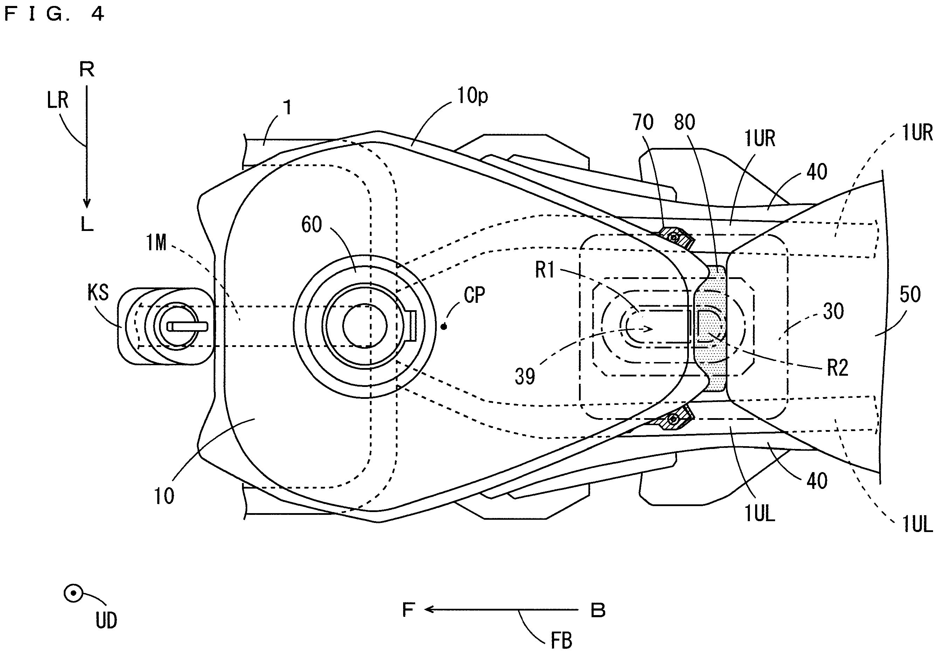

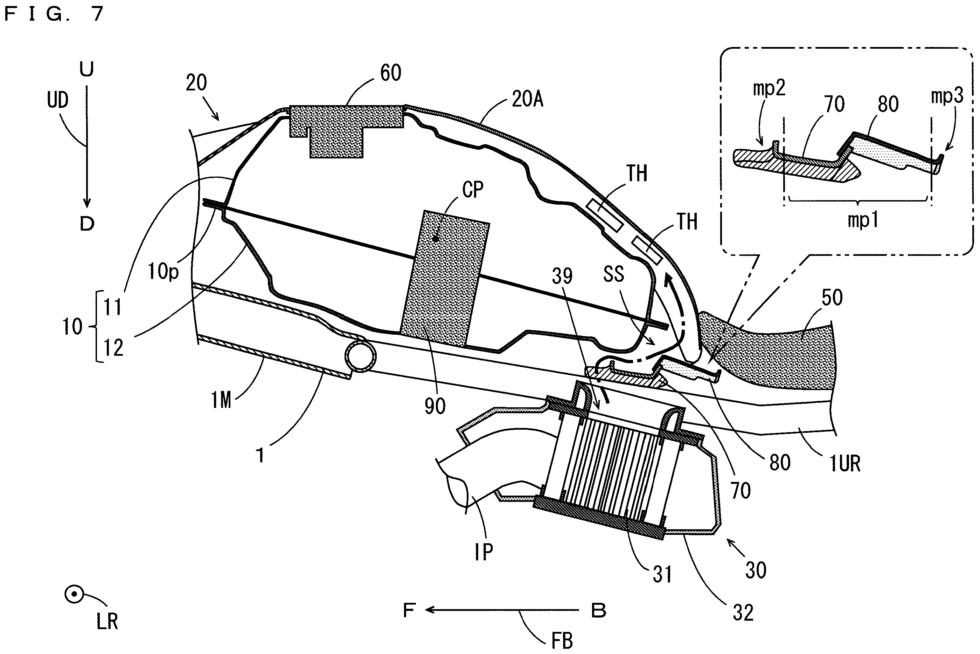

Fig. 3 is a partially enlarged plan view of the motorcycle 100 in which the entire tank cover 20, the front end portion of the seat 50 and its vicinity in the plan view of Fig. 2 are enlarged. Figs. 4 to 6 are partially enlarged plan views of the motorcycle 100 showing the plurality of constituent elements, which are located above the air cleaner 30, being sequentially detached. The partially enlarged plan views of Figs. 4 to 6 correspond to the partially enlarged plan view of Fig. 3. Fig. 7 is a cross sectional view taken along the line A-A of Fig. 3;

### (1) Mainly Regarding Tank Cover 20

In Fig. 3, the tank cover 20 is indicated by the thick solid lines, and the fuel tank 10 covered by the tank cover 20 is indicated by the two-dots and dash lines. As shown in Fig. 3, the tank cover 20 covers the entire fuel tank 10 from above. The seat 50 is provided rearwardly of the tank cover 20 so as to be adjacent to the rear end portion of the tank cover 20. A tank cap 60 is provided in an upper portion of the fuel tank 10 and at a position slightly farther forward than the center CP of the fuel tank 10 in plan view. A fuel pump 90 for supplying fuel in the fuel tank 10 to the engine 5 is provided in the fuel tank 10 (Fig. 7).

The tank cover 20 according to the present embodiment has the configuration in which a center cover 20A, a right cover 20B and a left cover 20C are connected. When the fuel tank 10 is divided into three equal portions in the left-and-right direction LR in plan view, the center cover 20A substantially covers a center portion Ra1 of the fuel tank 10 from above in plan view except for the tank cap 60. The key cylinder KS is provided forwardly of the center cover 20A so as to be adjacent to the center cover 20A.

On the other hand, the right cover 20B substantially covers a right portion Ra2 of the fuel tank 10 from above and covers the right end portion of the fuel tank 10 from the right in plan view. On the other hand, the left cover 20C substantially covers a left portion Ra3 of the fuel tank 10 from above and covers the left end portion of the fuel tank 10 from the left in plan view.

Here, the plurality of through holes TH of the tank cover 20 described with reference to Figs. 1 and 2 overlap with the center portion Ra1 of the fuel tank 10 in plan view and are formed in the center cover 20A. On the other hand, the plurality of through holes TH do not overlap with the right portion Ra2 or the left portion Ra3 of the tank cover 20 in plan view. Therefore, the through hole TH is not formed in the right portion Ra2 or the left portion Ra3 of the tank cover 20.

As described below, an intake sound generated in the intake port 39 of the air cleaner 30 of Fig. 1 is output from the plurality of through holes TH to the outside of the motorcycle 100. With the above-mentioned configuration, the distance between the head of the rider seated on the seat 50 and the plurality of through holes TH is short as compared to a case in which the plurality of through holes TH overlap with the right portion Ra2 of the fuel tank 10 in plan view. Further, the distance between the head of the rider seated on the seat 50 and the plurality of through holes TH is short as compared to a case in which the plurality of through holes TH overlap with the left portion Ra3 of the fuel tank 10 in plan view. Thus, the rider easily hears an intake sound of the air cleaner 30.

Further, in a case in which the fuel tank 10 is equally divided into three portions in the front-and-rear direction FB in plan view, the plurality of through holes TH overlap with a rear portion Rb3 of the fuel tank 10 and do not overlap with a front portion Rb1 or a center portion Rb2 in plan view. In this case, the distance between the head of the rider seated on the seat 50 and the plurality of through holes TH is short as compared to a case in which the plurality of through holes TH overlap with the front portion Rb1 or the center portion Rb2 of the fuel tank 10 in plan view. Further, as compared to a case in which the plurality of through holes TH overlap with the front portion Rb1 or the center portion Rb2 of the fuel tank 10 in plan view, the distance between the plurality of through holes TH and the intake port 39 of the air cleaner 30 can be made short. As a result, the rider easily hears an intake sound of the air cleaner 30.

In the tank cover 20 according to the present embodiment, the four through holes TH are arranged in a dispersed manner as the plurality of through holes TH. Specifically, two of the four through holes TH are formed so as to be aligned in the front-and-rear direction in the rear portion and in the vicinity of the right edge portion of the center cover 20A. The other two of the four through holes TH are formed so as to be aligned in the front-and-rear direction in the rear portion and in the vicinity of the left edge portion of the center cover 20A.

When one through hole TH is closed by contact of the body of the rider seated on the seat 50 with the tank cover 20, an intake sound is not output from the one through hole TH. With the above-mentioned configuration, because the plurality of through holes TH are arranged in a dispersed manner in the tank cover 20, even in a case in which the body of the rider comes into contact with the tank cover 20, all of the through holes TH are unlikely to be closed at the same time. Therefore, in a case in which part of the plurality of through holes TH is closed and the remaining through holes TH are not closed, an intake sound of the air cleaner is output from the remaining through holes TH. Therefore, it reduces the possibility that an intake sound is not output.

Further, in regard to each of the plurality of through holes TH, two right through holes TH have a plane shape in plan view and a plane shape in right side view. Two left through holes TH have a plane shape in plan view and a plane shape in left side view (see the enlarged view in the balloon of Fig. 1). With such a configuration, even in a case in which the body of the rider seated on the seat 50 comes into contact with the tank cover 20 from above, each through hole TH is likely to be maintained with at least part of the through hole TH being opened sidewardly (rightwardly or leftwardly). Further, even in a case in which the body of the rider seated on the seat 50 comes into contact with the tank cover 20 from the side (right side or left side), each through hole TH is likely to be maintained with at least part of the through hole TH being opened upwardly. Therefore, it reduces the possibility that an intake sound of the air cleaner 30 is not output.

### (2) Mainly Regarding Fuel Tank 10

Fig. 4 is a partially enlarged plan view of the motorcycle 100 showing the tank cover 20 of Fig. 3 being detached. In Fig. 4, the air cleaner 30 and its intake port 39 located below the fuel tank 10 and the seat 50 are indicated by the one-dot and dash line.

As shown in Fig. 4, the fuel tank 10 and the seat 50 are supported on the body frame 1. A gap is formed between the rear end portion of the fuel tank 10 and the front end portion of the seat 50 in the front-and-rear direction FB.

In plan view, a partial region of the intake port 39 of the air cleaner 30 overlaps with the rear end portion of the fuel tank 10 and its vicinity. In the following description, the partial region of the intake port 39 overlapping with the fuel tank 10 in plan view is referred to as a first opening region R1. Further, the region of the intake port 39 other than the first opening region R1 in plan view is referred to as a second opening region R2. The second opening region R2 is adjacent to the first opening region R1 at a position rearward of the first opening region R1.

As described above, the plurality of through holes TH are formed in the tank cover 20 that covers the fuel tank 10 from above. Therefore, droplets of rainwater or the like may enter the plurality of through holes TH. Even in such a case, because the plurality of through holes TH overlap with the fuel tank 10 in plan view, droplets falling downwardly from the plurality of through holes TH are received by the upper surface of the fuel tank 10.

Further, as shown in Fig. 7, the fuel tank 10 is supported on the body frame 1 such that its upper surface is inclined with respect to a horizontal plane. Therefore, droplets received by the upper surface of the fuel tank 10 flow to the rear end portion or both of the side portions of the fuel tank 10 and do not fall to a position below the fuel tank 10. Therefore, droplets do not directly enter the first opening region R1 of the intake port 39.

On the other hand, as shown in Fig. 4, the fuel tank 10 is not present above the second opening region R2 of the intake port 39. Therefore, when flowing rearwardly along the upper surface, droplets received by the upper surface of the fuel tank 10 may fall from the rear end portion of the fuel tank 10 and enter the second opening region R2.

As such, in the motorcycle 100 according to the present embodiment, a first shielding member 70 and a second shielding member 80 that cover part of the intake port 39 at a position above the intake port 39 are provided in order to prevent droplets from entering the second opening region R2. In Fig. 4 and the subsequent given diagrams, the dotted pattern is applied to the first shielding member 70 and the hatching is applied to the second shielding member 80 such that they facilitate understanding of the shapes of the first shielding member 70 and the second shielding member 80. As shown in Fig. 4, the second shielding member 80 is located between the left and right upper rails 1UR, 1UL, and part of the second shielding member 80 overlaps with the second opening region R2 of the intake port 39 in plan view.

### (3) Mainly Regarding First and Second Shielding Members 70, 80

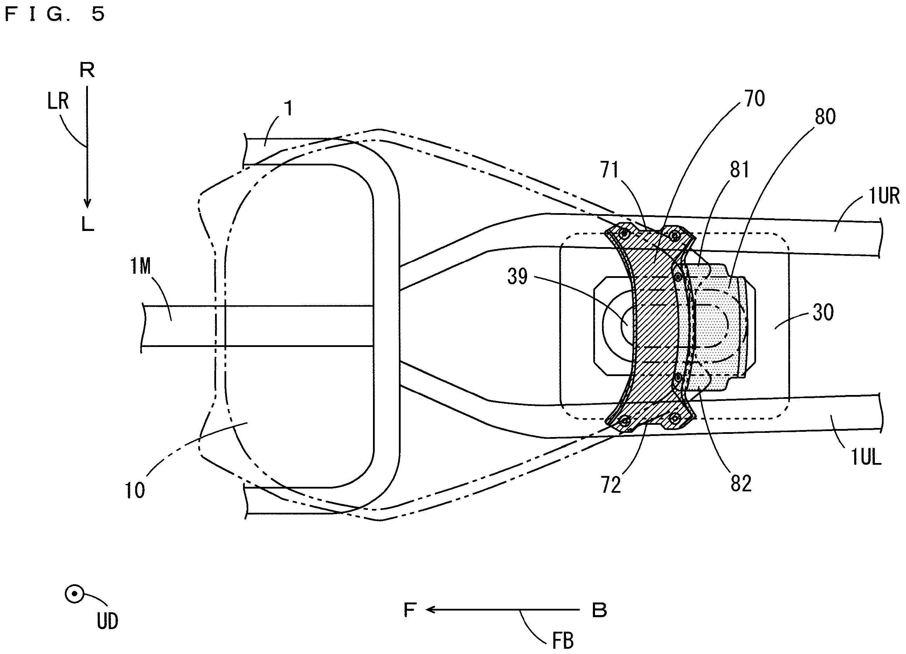

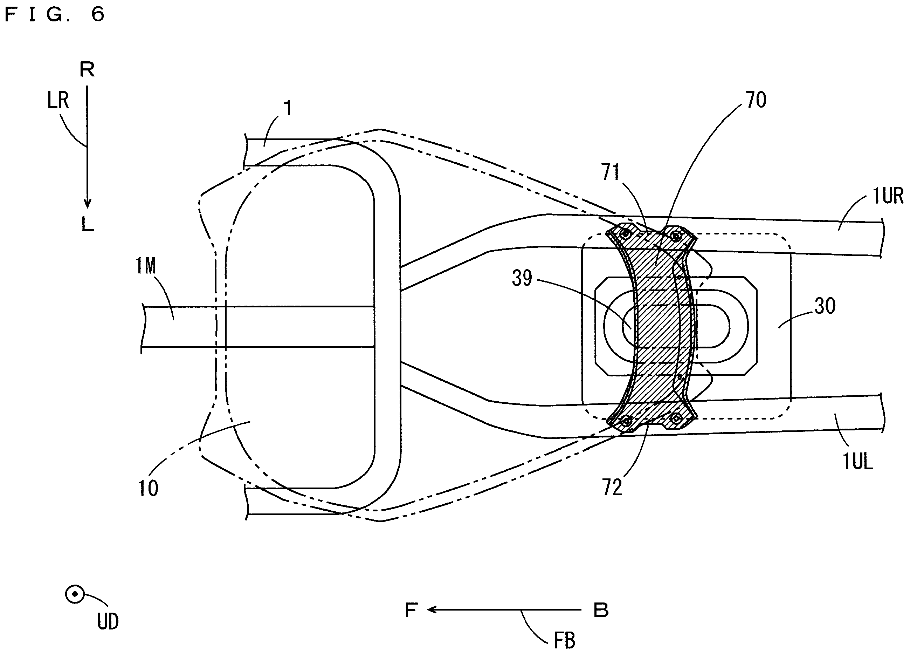

Fig. 5 is a partially enlarged plan view of the motorcycle 100 showing the fuel tank 10 and the seat 50 of Fig. 4 being detached. Fig. 6 is a partially enlarged plan view of the motorcycle 100 showing the second shielding member 80 of Fig. 5 being detached. In Figs. 5 and 6, the members located farther downwardly than the relay frame 1M and the upper rails 1UR, 1UL are not shown except for the air cleaner 30. Further, in Figs. 5 and 6, the fuel tank 10 is indicated by the two-dots and dash line.

As shown in Fig. 6, the first shielding member 70 is a metal plate-like member extending in a strip shape in one direction in plan view. The first shielding member 70 is arranged on the left and right upper rails 1UR, 1UL so as to extend in the left-and-right direction LR. A right end portion 71 of the first shielding member 70 is screwed onto the right upper rail 1UR. A left end portion 72 of the first shielding member 70 is screwed onto the left upper rail 1UL. Thus, the first shielding member 70 connects the left and right upper rails 1UR, 1UL to each other. Therefore, the first shielding member 70 has a function of reinforcing the body frame 1 in addition to a function of receiving droplets, described below.

As shown in Fig. 5, the second shielding member 80 is a resin plate-like member extending in one direction in a strip shape in plan view. The length of the second shielding member 80 in the longitudinal direction is shorter than the length of the first shielding member 70 in the longitudinal direction. The second shielding member 80 is configured to be connectable to the rear end portion of the first shielding member 70 with a screw.

When the second shielding member 80 is connected to the first shielding member 70 attached to the body frame 1, the first shielding member 70 and the second shielding member 80 are arranged in this order in the front-and-rear direction. In this state, the second shielding member 80 is located between the left and right upper rails 1UR, 1UL in plan view. Further, the first shielding member 70 and the second shielding member 80 cover a large region of the intake port 39 from above.

The region of the intake port 39 covered by the first shielding member 70 and the second shielding member 80, that is, the region of the intake port 39 overlapping with the first shielding member 70 and the second shielding member 80 in plan view includes the second opening region R2 of Fig. 4. Thus, even in a case in which falling from the rear end portion of the fuel tank 10 or its vicinity to the second opening region R2 of the intake port 39, droplets flowing on the upper surface of the fuel tank 10 are received by one of the first shielding member 70 and the second shielding member 80. Therefore, the droplets are prevented from directly entering the air cleaner 30.

Further, as shown in Figs. 5 and 6, the right end portion 71 of the first shielding member 70 and a right end portion 81 of the second shielding member 80 are located farther rightwardly than the intake port 39 in plan view. Further, the left end portion 72 of the first shielding member 70 and the left end portion 82 of the second shielding member 80 are located farther leftwardly than the intake port 39 in plan view. Thus, even in a case in which falling on the first shielding member 70 with the vehicle inclined sidewardly (rightwardly or leftwardly), droplets received by the first shielding member 70 fall from the right end portion 71 or the left end portion 72 without falling into the intake port 39. Further, even in a case in which falling on the second shielding member 80 with the vehicle inclined sidewardly (rightwardly or leftwardly), droplets received by the second shielding member 80 fall from the right end portion 81 or the left end portion 82 without falling into the intake port 39. Therefore, droplets are prevented from entering the air cleaner 30 when the vehicle turns.

An enlarged cross sectional view of the first shielding member 70 and the second shielding member 80 connected to each other is shown in the balloon of the two-dots and dash line in Fig. 7. As shown in Fig. 7, the first shielding member 70 and the second shielding member 80 include a liquid receiving portion mp1, a front wall portion mp2 and a rear wall portion mp3.

The liquid receiving portion mp1 is constituted by a portion of the first shielding member 70 (the portion excluding the front end portion) and a portion of the second shielding member 80 (the portion excluding the rear end portion). The liquid receiving portion mp1 has an upper surface that overlaps with at least the rear end portion of the fuel tank 10 and the rear end portion of the tank cover 20 in plan view. Thus, the liquid receiving portion mp1 receives droplets falling from the rear end portion of the fuel tank 10 or the rear end portion of the tank cover 20 along the upper surface of the fuel tank 10 or the inner surface of the tank cover 20.

The front wall portion mp2 is constituted by the other portion (front end portion) of the first shielding member 70, and is formed so as to project upwardly from the front end portion of the liquid receiving portion mp1 by a certain distance. On the other hand, the rear wall portion mp3 is constituted by the other portion (rear end portion) of the second shielding member 80, and is formed so as to project upwardly from the rear end portion of the liquid receiving portion mp1 by a certain distance.

With the above-mentioned configuration, even in a case in which droplets received by the liquid receiving portion mp1 flow forwardly of the vehicle on the liquid receiving portion mp1, the droplets flowing to the front end portion of the liquid receiving portion mp1 are received by the front wall portion mp2 and do not fall forwardly of the first shielding member 70. Further, even in a case in which droplets received by the liquid receiving portion mp1 flow rearwardly of the vehicle on the liquid receiving portion mp1, the droplets flowing to the rear end portion of the liquid receiving portion mp1 are received by the rear wall portion mp3 and do not fall rearwardly of the second shielding member 80. As a result, during traveling of the vehicle, droplets that have entered the plurality of through holes TH from the outside of the motorcycle 100 are prevented from falling into the intake port 39 of the air cleaner 30.

### (4) Transmission Path of Intake Sound from Intake Port 39 to Plurality of Through Holes TH

As shown in Fig. 7, the air cleaner 30 according to the present embodiment basically has a configuration in which a tubular (an elongated cylindrical, to be more specific) filter element 31 is provided in an air cleaner box 32. The space in the air cleaner box 32 is divided into a dirty chamber and a clean chamber by the filter element 31. The space in the filter element 31 serves as the dirty chamber. One end of the intake pipe IP is connected to the air cleaner 30 so as to lead an atmosphere in the clean chamber to the engine 5 of Fig. 1.

During an operation of the engine 5, air is introduced from the outside of the motorcycle 100 into the intake port 39 through the gaps between the members of the motorcycle 100 and the space between the left and right upper rails 1UR, 1UL. At this time, an intake sound is generated in the intake port 39. An intake sound generated in the intake port 39 of the air cleaner 30 is output to the outside of the motorcycle 100 from the plurality of through holes TH of the tank cover 20 through the sound transmission space SS formed in the tank cover 20.

The sound transmission space SS extends continuously from the intake port 39 to the plurality of through holes TH of the tank cover 20 while bypassing the first shielding member 70, the second shielding member 80, and the rear end portion of the fuel tank 10, as indicated by the thick one-dot and dash arrow in Fig. 7. The sound transmission space SS includes the gap space between the intake port 39 of the air cleaner 30, and the first shielding member 70 and the second shielding member 80. The sound transmission space SS includes the gap space between the first shielding member 70 and the second shielding member 80, and the fuel tank 10. Further, the sound transmission space SS includes the gap space between the fuel tank 10 and the tank cover 20 (the center cover 20A).

With the above-mentioned configuration, the sound transmission space SS is formed in a zigzag shape between the plurality of through holes TH of the tank cover 20 and the intake port 39 of the air cleaner 30 in the vertical cross section parallel to the front-and-rear direction FB. Thus, by adjusting the shape and arrangement of the fuel tank 10, it is possible to adjust the length of the transmission path of an intake sound from the intake port 39 of the air cleaner 30 to the plurality of through holes TH of the tank cover 20. Alternatively, by adjusting the positions of the plurality of through holes TH in the tank cover 20, it is possible to adjust the length of the transmission path of an intake sound from the intake port 39 of the air cleaner 30 to the plurality of through holes TH of the tank cover 20. The length of the transmission path of an intake sound contributes to the resonance frequency of the intake sound. Therefore, by determining in advance the shape and arrangement of the fuel tank 10 for generation of a desired intake sound, it is possible to prevent generation of an unpleasant intake sound without preparing a new duct for distance adjustment. Alternatively, by determining the positions of the plurality of through holes TH in the tank cover 20 in advance for generation of a desired intake sound, it is possible to prevent generation of an unpleasant intake sound without preparing a new duct for distance adjustment.

### (5) One Example of Flow of Droplets That Have Entered Plurality Of Through Holes TH

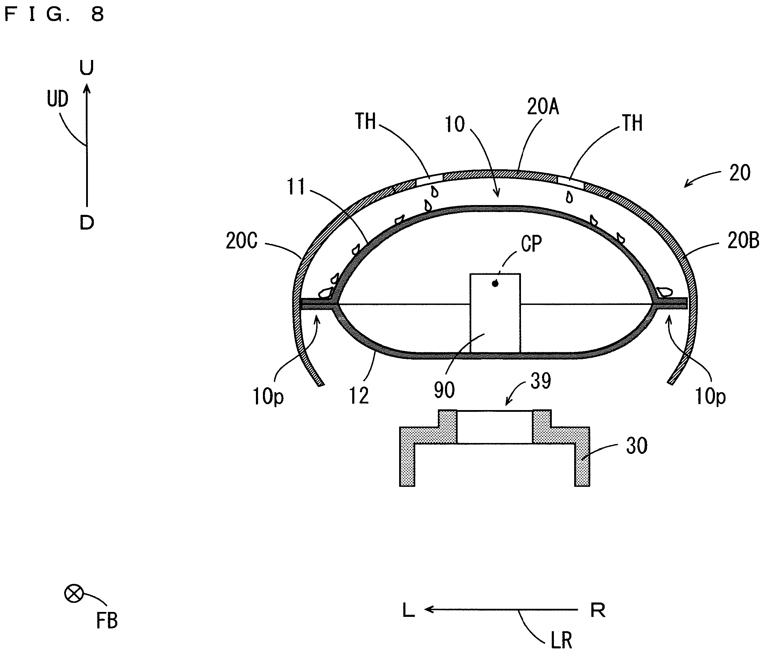

Fig. 8 is a schematic cross sectional view taken along the line B-B of Fig. 3. As shown in Figs. 7 and 8, the fuel tank 10 mainly includes an upper member 11 and a lower member 12. Each of the upper member 11 and the lower member 12 is fabricated by pressing of a metal plate into a predetermined shape, for example. The upper member 11 and the lower member 12 have the same outer shape in plan view. When the outer peripheral end portions of the upper member 11 and the lower member 12 are joined to each other, a space capable of storing fuel is formed between the upper member 11 and the lower member 12.

The joint portion between the upper member 11 and the lower member 12 projects outwardly of the fuel tank 10 by a predetermined width from portions of the upper member 11 and the lower member 12 that form the inner space of the fuel tank 10. The joint portion between the upper member 11 and the lower member 12 is referred to as a projection 10p of the fuel tank 10. As shown in Fig. 4, the projection 10p extends over the entire outer peripheral end portion of the fuel tank 10 in plan view.

As shown in Fig. 8, in a vertical cross section parallel to the left-and-right direction LR, the inner surface of the right cover 20B and the inner surface of the left cover 20C are provided to both come into contact with the projection 10p of the fuel tank 10. Thus, in a case in which the rider seated on the seat 50 holds the tank cover 20 between his or her thighs, deformation of the tank cover 20 is suppressed by the projection 10p of the fuel tank 10.

The upper member 11 of the fuel tank 10 extends downwardly while being curved as the distance from the center CP of the fuel tank 10 to the upper member 11 increases in the left-and-right direction LR. Thus, at least part of droplets that enter the plurality of through holes TH and are received by the upper surface of the fuel tank 10 (the upper surface of the upper member 11) flow along the upper surface toward the left and right end portions of the fuel tank 10 and reach the projection 10p.

Here, as shown in Fig. 7, the fuel tank 10 is supported by the body frame 1 such that the joint surface between the upper member 11 and the lower member 12 extends rearwardly and obliquely downwardly in side view. Thus, droplets that have reached the projection 10p of the fuel tank 10 further flow rearwardly of the vehicle on the projection 10p and fall at a position spaced apart from the intake port 39 of the air cleaner 30.

In this manner, in the above-mentioned fuel tank 10, the tank cover 20 is provided on the fuel tank 10, so that the projection 10p functions as a reinforcing member of the tank cover 20. Further, the projection 10p functions as part of a groove that guides droplets that have entered from the through hole TH to a position spaced apart from the intake port 39 of the air cleaner 30.

### 3. Effects

As described above, in the motorcycle 100 according to the present embodiment, the intake port 39 of the air cleaner 30 is opened upwardly at a position farther downward than the fuel tank 10 and farther rearward than the center CP of the fuel tank 10. Thus, the rider easily hears an intake sound of the air cleaner 30. Further, the plurality of through holes TH of the tank cover 20 overlap with the fuel tank 10 in plan view. Thus, even in a case in which droplets of rainwater or the like enter the space below the tank cover 20 from above the tank cover 20 through the plurality of through holes TH, the entering droplets are received by the fuel tank 10. Therefore, droplets are prevented from directly entering the intake port 39 of the air cleaner 30. As a result, it is possible to allow the rider to efficiently hear an intake sound of the air cleaner 30 while reducing entry of droplets to the air cleaner 30.

### 4. Other Embodiments

(1) While the first shielding member 70 and the second shielding member 80 are provided so as to cover part of the intake port 39 of the air cleaner 30 in the above-mentioned embodiment, the present invention is not limited to this. The first shielding member 70 and the second shielding member 80 may be formed such that the liquid receiving portion mp1 covers the entire intake port 39 in plan view. In other words, the first shielding member 70 and the second shielding member 80 may be formed such that the liquid receiving portion mp1 overlaps with the entire intake port 39 in plan view. In this case, entry of droplets to the intake port 39 is further reduced.

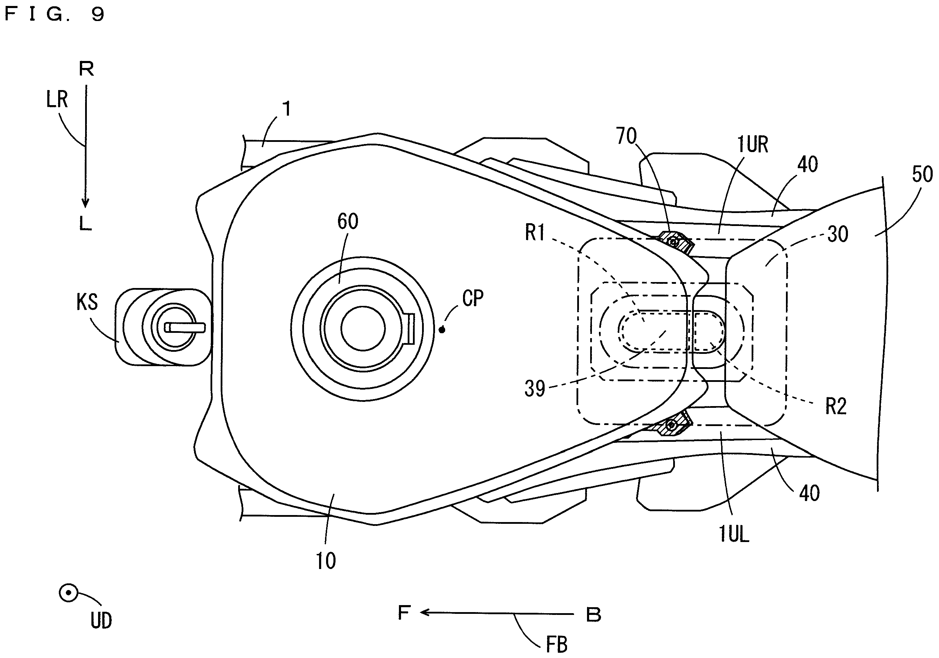

Alternatively, the first shielding member 70 or the second shielding member 80 does not have to be provided. Alternatively, of the first shielding member 70 and the second shielding member 80, the second shielding member 80 does not have to be provided. Fig. 9 is a partially enlarged plan view showing the configuration in which the tank cover 20 is detached from the motorcycle 100 not having the second shielding member 80 of Fig. 5.

With the configuration of Fig. 9, the second opening region R2 of the intake port 39 is not covered by the second shielding member 80. However, even with such a configuration, the second opening region R2 of the intake port 39 is covered by the tank cover 20. Further, the second opening region R2 does not overlap with the plurality of through holes TH of the tank cover 20 in plan view. Therefore, even in a case in which entering the plurality of through holes TH from outside of the motorcycle 100, droplets are prevented from directly falling toward the second opening region R2.

Further, with the above-mentioned configuration, because the second opening region R2 does not overlap with the fuel tank 10 in plan view, part of an intake sound generated in the intake port 39 is directly output from the plurality of through holes TH of the tank cover 20 without bypassing the fuel tank 10. In this case, the second opening region R2 of the intake port 39 is located in the vicinity of the rear end portion of the fuel tank 10. Because being adjacent to the front end portion of the seat 50, the rear end portion of the fuel tank 10 is close to the head of the rider who is seated on the seat 50. As a result, the rider easily hears an intake sound of the air cleaner 30.

(2) While the first shielding member 70 and the second shielding member 80 according to the above-mentioned embodiment are attached to the body frame 1 while being connected to each other, the present invention is not limited to this. The first shielding member 70 and the second shielding member 80 may be constituted by a single member made of a common material (metal or resin, for example).

(3) While the tank cover 20 according to the above-mentioned embodiment has a configuration in which the center cover 20A, the right cover 20B and the left cover 20C, which are individually manufactured, are connected to each other, the present invention is not limited to this. The tank cover 20 may be constituted by a single member.

(4) While the four through holes TH are formed in the tank cover 20 according to the above-mentioned embodiment, the present invention is not limited to this. Only one through hole TH may be formed in the tank cover 20. Alternatively, two or three through holes TH may be formed in the tank cover 20. Alternatively, five or more through holes TH may be formed in the tank cover 20.

(5) While the plurality of through holes TH overlap with only the center portion Ra1 of the fuel tank 10 in the left-and-right direction LR in plan view in the tank cover 20 according to the above-mentioned embodiment, the present invention is not limited to this. At least one of the through holes TH may overlap with the center portion Ra1 of the fuel tank 10 in plan view. Therefore, as long as one of the plurality of through holes TH overlaps with the center portion Ra1 of the fuel tank 10 in plan view, the other through holes TH may overlap with at least one of the right portion Ra2 and the left portion Ra3 of the fuel tank 10 in plan view.

(6) While the plurality of through holes TH overlap with only the rear portion Rb3 of the fuel tank 10 in the front-and-rear direction FB in plan view in the tank cover 20 according to the above-mentioned embodiment, the present invention is not limited to this. The plurality of through holes TH may be formed in at least one of the center portion Rb2 and the rear portion Rb3 in the front-and-rear direction FB of the fuel tank 10. In this case, the distance between the plurality of through holes TH and the intake port 39 of the air cleaner 30 can be made short as compared to a case in which the plurality of through holes TH overlap with the front portion Rb1 of the fuel tank 10 in plan view. Therefore, the rider easily hears an intake sound of the air cleaner 30.

(7) While the above-mentioned embodiment is an example in which the present invention is applied to a motorcycle, the present invention is not limited to this. The present invention may be applied to another straddled vehicle such as a four-wheeled automobile, a motor tricycle or an ATV (All Terrain Vehicle).

### 5. Correspondences Between Constituent Elements in Claims and Parts in Preferred Embodiments

In the following paragraphs, non-limiting examples of correspondences between various elements recited in the claims below and those described above with respect to various preferred embodiments of the present invention are explained. As each of constituent elements recited in the claims, various other elements having configurations or functions described in the claims can be also used.

In the above-mentioned embodiment, the motorcycle 100 is an example of a straddled vehicle, the seat 50 is an example of a seat, the engine 5 is an example of an engine, the fuel tank 10 is an example of a fuel tank, the tank cover 20 is an example of a tank cover, the intake port 39 is an example of an intake port, and the air cleaner 30 is an example of an air cleaner.

Further, the plurality of through holes TH are an example of one or a plurality of through holes, the first opening region R1 is an example of a first opening region, the second opening region R2 is an example of a second opening region, the configuration including the first shielding member 70 and the second shielding member 80 is an example of a shielding member, the liquid receiving portion mp1 is an example of a liquid receiving portion, the front wall portion mp2 is an example of a front wall portion, the rear wall portion mp3 is an example of a rear wall portion, and the sound transmission space SS is an example of a sound transmission space.

### 6. Overview of Embodiments and Examples

(Item 1) A straddled vehicle according to the invention includes a fuel tank provided at a position forwardly of a seat in the vehicle and above an engine, tank cover provided so as to cover the fuel tank at least from above, and an air cleaner having an intake port, wherein the intake port is opened upwardly at a position farther downward than the fuel tank and farther rearward than a center of the fuel tank in the vehicle, and one or a plurality of through holes overlapping with the fuel tank in plan view are formed in the tank cover.

In the straddled vehicle, the intake port of the air cleaner is located at a portion of the straddled vehicle that is relatively close to the head of a rider seated on the seat. An intake port of the air cleaner is opened upwardly. Thus, during an operation of the engine, an intake sound generated in the intake port of the air cleaner is output upwardly of the tank cover through the one or plurality of through holes of the tank cover. Therefore, the rider can easily hear an intake sound of the air cleaner.

Further, the one or plurality of through holes of the tank cover overlap with the fuel tank in plan view. Thus, even in a case in which droplets of rainwater or the like enter the space below the tank cover through the one or plurality of through holes from above the tank cover, the entering droplets are prevented from directly entering the intake port of the air cleaner.

As a result, it is possible to allow the rider to efficiently hear an intake sound of the air cleaner while reducing entry of droplets to the air cleaner.

(Item 2) The straddled vehicle according to item 1, wherein in a case in which the fuel tank is divided into three equal portions in a vehicle left-and-right direction in plan view, the one or plurality of through holes may overlap with a center portion of the fuel tank in plan view.

In this case, the distance between the head of the rider seated on the seat and the one or plurality of through holes is short as compared to a case in which the one or plurality of through holes overlap with the left portion of the fuel tank in plan view. Further, the distance between the head of the rider seated on the seat and the one or plurality of through holes is short as compared to a case in which the one or plurality of through holes overlap with the right portion of the fuel tank in plan view. Thus, the rider can easily hear an intake sound of the air cleaner.

(Item 3) The straddled vehicle according to item 2, wherein in a case in which the fuel tank is divided into three equal portions in the vehicle left-and-right direction in plan view, the one or plurality of through holes do not have to overlap with a left portion or a right portion of the fuel tank in plan view.

In this case, the one or plurality of through holes do not overlap with the left portion or the right portion of the fuel tank in plan view. This enables the rider to efficiently hear an intake sound of the air cleaner.

(Item 4) The straddled vehicle according to the invention, wherein in a case in which the fuel tank is divided into three equal portions in a vehicle front-and-rear direction in plan view, the one or plurality of through holes may overlap with one of a center portion and a rear portion of the fuel tank in plan view, and do not have to overlap with a front portion of the fuel tank in plan view.

In this case, the distance between the head of the rider seated on the seat and the one or plurality of through holes is short as compared to a case in which the one or plurality of through holes overlap with the front portion of the fuel tank in plan view. Thus, the rider can easily hear an intake sound of the air cleaner.

(Item 5) The straddled vehicle according to any one of items 1 to 4, wherein the one or plurality of through holes may include a plurality of through holes arranged in a dispersed manner in the tank cover.

When one through hole is closed due to contact of the body of the rider seated on the seat with the tank cover, an intake sound is not output from the one through hole. With the above-mentioned configuration, because the plurality of through holes are arranged in a dispersed manner in the tank cover, even in a case in which the body of the rider comes into contact with the tank cover, all of the through holes are unlikely to be closed at the same time. Therefore, in a case in which part of the plurality of through holes is closed and the remaining through holes are not closed, an intake sound of the air cleaner is output from the remaining through holes. Therefore, it reduces the possibility that an intake sound is not output.

(Item 6) The straddled vehicle according to any one of items 1 to 5, wherein the intake port may include a first opening area that overlaps with one portion of the fuel tank including a rear end portion of the fuel tank in plan view, and a second opening area that is adjacent to the first opening area and does not overlap with the fuel tank in plan view.

In this case, even in a case in which droplets of rainwater or the like enter the one or plurality of through holes of the tank cover, the entering droplets do not directly enter the first opening region of the intake port that overlaps with a portion of the fuel tank. Further, because the droplets that have entered the one or plurality of through holes of the tank cover are received by the portion of the fuel tank that overlaps with the one or plurality of through holes of the tank cover in plan view, the droplets do not directly enter the second opening region. Therefore, a large amount of droplets are prevented from entering the intake port of the air cleaner.

Further, with the above-mentioned configuration, because the second opening region of the intake port does not overlap with the fuel tank in plan view, part of an intake sound generated in the intake port is directly output from the one or plurality of through holes of the tank cover without bypassing the fuel tank. Further, in this case, the second opening region of the intake port is located in the vicinity of a portion of the fuel tank. The one portion of the fuel tank is adjacent to the seat, thereby being close to the head of a rider seated on the seat. Therefore, the rider can easily hear an intake sound of the air cleaner.

(Item 7) The straddled vehicle according to any one of items 1 to 6, may further include a shielding member that covers at least part of the intake port of the air cleaner at a position farther upward than the intake port of the air cleaner.

With the above-mentioned configuration, even in a case in which droplets of rainwater or the like fall into the intake port of the air cleaner, at least part of the droplets is received by the shielding member. Therefore, it reduces entry of droplets to the air cleaner.

(Item 8) The straddled vehicle according to item 7, wherein a right end portion of the shielding member may be located farther rightwardly than the intake port in plan view, and a left end portion of the shielding member may be located farther leftwardly than the intake port in plan view.

With the above-mentioned configuration, in a case in which droplets fall on the shielding member, droplets received by the shielding member fall from the right end portion or the left end portion of the shielding member without falling into the intake port. Therefore, it reduces entry of droplets into the air cleaner more sufficiently.

(Item 9) The straddled vehicle according to item 7 or 8, wherein the shielding member may have a front wall portion, a liquid receiving portion and a rear wall portion, the front wall portion may be formed to project upwardly from a front end portion of the liquid receiving portion by a certain distance in a vertical cross section parallel to a vehicle front-and-rear direction, and the rear wall portion may be formed to project upwardly from a rear end portion of the liquid receiving portion by a certain distance in the vertical cross section parallel to the vehicle front-and-rear direction.

With the above-mentioned configuration, even in a case in which droplets received by the liquid receiving portion of the shielding member flow forwardly of the vehicle on the liquid receiving portion, the droplets that have flowed to the front end portion of the liquid receiving portion are received by the front wall portion and do not fall forwardly of the shielding member. Further, even in a case in which droplets received by the liquid receiving portion of the shielding member flow rearwardly of the vehicle on the liquid receiving portion, the droplets that have flowed to the rear end portion of the liquid receiving portion are received by the rear wall portion and do not fall rearwardly of the shielding member.

(Item 10) The straddled vehicle according to any one of items 1 to 9, wherein at least one of the one or plurality of through holes of the tank cover may have a plane-shape in plan view and has a plane shape in side view.

With the above-mentioned configuration, even in a case in which the body of the rider seated on the seat comes into contact with the tank cover from above, one through hole is likely to be maintained with at least part of the through hole opened sidewardly. Further, even in a case in which the body of the rider seated on the seat comes into contact with the tank cover from the side, the one through hole is likely to be maintained with at least part of the through hole opened upwardly. Therefore, it reduces the possibility that an intake sound of the air cleaner is not output.

(Item 11) The straddled vehicle according to the invention, wherein a sound transmission space may be formed between the air cleaner and the tank cover so as to continuously extend from the intake port of the air cleaner to the one or plurality of through holes of the tank cover.

In this case, the intake sound of the air cleaner is output to the outside of the tank cover through the sound transmission space.

(Item 12) The straddled vehicle according to item 11, wherein at least part of the intake port may overlap with one portion of the fuel tank in plan view, and the sound transmission space continuously may extend from the intake port of the air cleaner to the one or plurality of through holes of the tank cover while bypassing the one portion of the fuel tank.

With the above-mentioned configuration, the sound transmission space is formed in a zigzag shape between the one or plurality of through holes of the tank cover and the intake port of the air cleaner in a predetermined vertical cross section. Thus, by adjusting the shape and arrangement of the fuel tank, it is possible to adjust the length of the transmission path of an intake sound from the intake port of the air cleaner to the one or plurality of through holes. The length of the transmission path of an intake sound contributes to the resonance frequency of the intake sound. Therefore, by determining in advance the shape and arrangement of the fuel tank for generation of a desired intake sound, it is possible to prevent generation of an unpleasant intake sound without preparing a new duct for distance adjustment.

## Claims

1. A straddled vehicle (100) comprising:
a fuel tank (10) provided at a position forwardly of a seat (50) in the vehicle (100) and above an engine (5);
a tank cover (20) provided so as to cover the fuel tank (10) at least from above; and
an air cleaner (30) having an intake port (39), wherein
the intake port (39) is opened upwardly at a position farther downward than the fuel tank (10) and farther rearward than a center (CP) of the fuel tank (10) in the vehicle (100);
wherein one or a plurality of through holes (TH) overlapping with the fuel tank (10) in plan view are formed in the tank cover (20),
**characterized in that**,
when the fuel tank (10) is divided into three equal portions in a vehicle front-and-rear direction (FB) in plan view, the one or plurality of through holes (TH) overlap with one of a center portion (Rb2) and a rear portion (Rb3) of the fuel tank (10) in plan view, and do not overlap with a front portion (Rb1) of the fuel tank(10) in plan view, and
a sound transmission space (SS) is formed between the air cleaner (30) and the tank cover (20) so as to continuously extend from the intake port (39) of the air cleaner (30) to the one or plurality of through holes (TH) of the tank cover (20).

2. The straddled vehicle according to claim 1, wherein when the fuel tank (10) is divided into three equal portions in a vehicle left-and-right direction (LR) in plan view, the one or plurality of through holes (TH) overlap with a center portion (Ra1) of the fuel tank (10) in plan view.

3. The straddled vehicle according to claim 2, wherein when the fuel tank (10) is divided into three equal portions in the vehicle left-and-right direction (LR) in plan view, the one or plurality of through holes (TH) do not overlap with a left portion (Ra3) or a right portion (Ra2) of the fuel tank (10) in plan view.

4. The straddled vehicle according to any one of claims 1 to 3, wherein
the one or plurality of through holes (TH) include a plurality of through holes (TH) arranged in a dispersed manner in the tank cover (20).

5. The straddled vehicle according to any one of claims 1 to 4, wherein
the intake port (39) includes
a first opening area (R1) that overlaps with one portion of the fuel tank (10) including a rear end portion of the fuel tank (10) in plan view, and
a second opening area (R2) that is adjacent to the first opening area (R1) and does not overlap with the fuel tank (10) in plan view.

6. The straddled vehicle according to any one of claims 1 to 5, further comprising a shielding member (70, 80) that covers at least part of the intake port (39) of the air cleaner (30) at a position farther upward than the intake port (39) of the air cleaner (30).

7. The straddled vehicle according to claim 6, wherein
a right end portion (71) of the shielding member (70) is located farther rightwardly than the intake port (39) in plan view, and
a left end portion (72) of the shielding member (70) is located farther leftwardly than the intake port (39) in plan view.

8. The straddled vehicle according to claim 6 or 7, wherein
the shielding member (70) has a front wall portion (mp2), a liquid receiving portion (mp1) and a rear wall portion (mp3),
the front wall portion (mp2) is formed to project upwardly from a front end portion of the liquid receiving portion (mp1) by a certain distance in a vertical cross section parallel to a vehicle front-and-rear direction (FB), and
the rear wall portion (mp3) is formed to project upwardly from a rear end portion of the liquid receiving portion (mp1) by a certain distance in the vertical cross section parallel to the vehicle front-and-rear direction (FB).

9. The straddled vehicle according to any one of claims 1 to 8, wherein
at least one of the one or plurality of through holes (TH) of the tank cover (20) has a plane shape in plan view and has a plane shape in side view.

10. The straddled vehicle according to any one of claims 1 to 9, wherein
at least part of the intake port (39) overlaps with one portion of the fuel tank (10) in plan view, and
the sound transmission space (SS) continuously extends from the intake port (39) of the air cleaner (30) to the one or plurality of through holes (TH) of the tank cover (20) while bypassing the one portion of the fuel tank (10).

## Patentansprüche

1. Aufsitzfahrzeug (100), umfassend:
einen Kraftstofftank (10), der in einer Position vor einem Sitz (50) im Fahrzeug (100) und über einem Motor (5) angeordnet ist;
einen Tankdeckel (20), der so angeordnet ist, dass er den Kraftstofftank (10) wenigstens von oben abdeckt; und
ein Luftfilter (30) mit einem Ansaugkanal (39), wobei
der Ansaugkanal (39) nach oben an einer Position geöffnet ist, die weiter unten als der Kraftstofftank (10) und weiter hinten als eine Mitte (CP) des Kraftstofftanks (10) im Fahrzeug (100) liegt;
wobei im Tankdeckel (20) ein oder eine Vielzahl von Durchgangslöchern (TH) ausgebildet ist, die in Draufsicht mit dem Kraftstofftank (10) überlappen,
**dadurch gekennzeichnet, dass**, wenn der Kraftstofftank (10) in Draufsicht in drei gleiche Abschnitte in einer Fahrzeug-Vorwärts-und-Rückwärts-Richtung (FB) unterteilt ist, das eine oder die Vielzahl von Durchgangslöchern (TH) in Draufsicht mit einem mittleren Abschnitt (Rb2) oder einem hinteren Abschnitt (Rb3) des Kraftstofftanks (10) überlappt und nicht mit einem vorderen Abschnitt (Rb1) des Kraftstofftanks (10) in Draufsicht überlappt, und
ein Schallübertragungsraum (SS) zwischen dem Luftfilter (30) und dem Tankdeckel (20) so gebildet ist, dass er sich kontinuierlich vom Ansaugkanal (39) des Luftfilters (30) zu dem einen oder der Vielzahl von Durchgangslöchern (TH) des Tankdeckels (20) erstreckt.

2. Aufsitzfahrzeug nach Anspruch 1, wobei,
wenn der Kraftstofftank (10) in Draufsicht in einer Fahrzeug-Links-und-Rechts-Richtung (LR) des Fahrzeugs in drei gleiche Abschnitte unterteilt ist, das eine oder die Vielzahl von Durchgangslöchern (TH) mit einem mittleren Abschnitt (Ra1) des Kraftstofftanks (10) in Draufsicht überlappt.

3. Aufsitzfahrzeug nach Anspruch 2, wobei,
wenn der Kraftstofftank (10) in Draufsicht in der Fahrzeug-Links-und-Rechts-Richtung (LR) in drei gleiche Abschnitte unterteilt ist, das eine oder die Vielzahl von Durchgangslöchern (TH) nicht mit einem linken Abschnitt (Ra3) oder einem rechten Abschnitt (Ra2) des Kraftstofftanks (10) in Draufsicht überlappt.

4. Aufsitzfahrzeug nach einem der Ansprüche 1 bis 3, wobei
das eine oder die Vielzahl von Durchgangslöchern (TH) eine Vielzahl von Durchgangslöchern (TH) umfasst, die im Tankdeckel (20) verteilt angeordnet sind.

5. Aufsitzfahrzeug nach einem der Ansprüche 1 bis 4, wobei
der Ansaugkanal (39)
einen ersten Öffnungsbereich (R1), der mit einem Abschnitt des Kraftstofftanks (10) überlappt, der in Draufsicht einen hinteren Endabschnitt des Kraftstofftanks (10), und
einen zweiten Öffnungsbereich (R2), der an den ersten Öffnungsbereich (R1) angrenzt und in Draufsicht nicht mit dem Kraftstofftank (10) überlappt, umfasst.

6. Aufsitzfahrzeug nach einem der Ansprüche 1 bis 5, ferner umfassend ein Abschirmelement (70, 80), das wenigstens einen Teil des Ansaugkanals (39) des Luftfilters (30) an einer Position abdeckt, die weiter oben liegt als der Ansaugkanal (39) des Luftfilters (30).

7. Aufsitzfahrzeug nach Anspruch 6, wobei
ein rechter Endabschnitt (71) des Abschirmelements (70) in Draufsicht weiter rechts angeordnet ist als der Ansaugkanal (39), und
ein linker Endabschnitt (72) des Abschirmelements (70) in Draufsicht weiter links angeordnet ist als der Ansaugkanal (39).

8. Aufsitzfahrzeug nach Anspruch 6 oder 7, wobei
das Abschirmelement (70) einen vorderen Wandabschnitt (mp2), einen Flüssigkeitsaufnahmeabschnitt (mp1) und einen hinteren Wandabschnitt (mp3) aufweist,
der vordere Wandabschnitt (mp2) so gebildet ist, dass er von einem vorderen Endabschnitt des Flüssigkeitsaufnahmeabschnitts (mp1) in einem vertikalen Querschnitt parallel zu einer Fahrzeug-Vorwärts-und-Rückwärts-Richtung (FB) um einen bestimmten Abstand nach oben vorsteht, und
der hintere Wandabschnitt (mp3) so gebildet ist, dass er von einem hinteren Endabschnitt des Flüssigkeitsaufnahmeabschnitts (mp1) im vertikalen Querschnitt parallel zur Fahrzeug-Vorwärts-und-Rückwärts-Richtung (FB) um einen bestimmten Abstand nach oben vorsteht.

9. Aufsitzfahrzeug nach einem der Ansprüche 1 bis 8, wobei
wenigstens eines des einen oder der Vielzahl von Durchgangslöchern (TH) des Tankdeckels (20) in Draufsicht eine ebene Form und in Seitenansicht eine ebene Form aufweist.

10. Aufsitzfahrzeug nach einem der Ansprüche 1 bis 9, wobei
wenigstens ein Teil des Ansaugkanals (39) in Draufsicht mit einem Abschnitt des Kraftstofftanks (10) überlappt, und
sich der Schallübertragungsraum (SS) kontinuierlich vom Ansaugkanal (39) des Luftfilters (30) zu dem einen oder der Vielzahl von Durchgangslöchern (TH) des Tankdeckels (20) erstreckt, während er den einen Abschnitt des Kraftstofftanks (10) umgeht.

## Revendications

1. Véhicule à enfourcher (100) comprenant :
un réservoir de carburant (10) pourvu dans une position à l'avant d'un siège (50) dans le véhicule (100) et au-dessus d'un moteur (5) ;
un couvercle de réservoir (20) pourvu de manière à couvrir le réservoir de carburant (10) au moins depuis le dessus ; et
un filtre à air (30) comportant un orifice d'admission (39), dans lequel
l'orifice d'admission (39) est ouvert vers le haut à une position plus basse que le réservoir de carburant (10) et plus en arrière que le centre (CP) du réservoir de carburant (10) dans le véhicule (100) ;
dans lequel un ou plusieurs trous traversants (TH) chevauchant le réservoir de carburant (10) en vue en plan sont formés dans le couvercle de réservoir (20),
**caractérisé en ce que**
le réservoir de carburant (10) est divisé en trois portions égales en direction avant-arrière (FB) du véhicule en vue en plan,
lesdits un ou plusieurs trous traversants (TH) chevauchent une portion parmi une portion centrale (Rb2) et une portion arrière (Rb3) du réservoir de carburant (10) en vue en plan, et ne chevauchent pas une portion avant (Rb1) du réservoir de carburant (10) en vue en plan, et
un espace de transmission sonore (SS) est formé entre le filtre à air (30) et le couvercle de réservoir (20) de manière à s'étendre en continu depuis l'orifice d'admission (39) du filtre à air (30) jusqu'auxdits un ou plusieurs trous traversants (TH) du couvercle de réservoir (20).

2. Véhicule à enfourcher selon la revendication 1, dans lequel
quand le réservoir de carburant (10) est divisé en trois portions égales en direction gauche-droite (LR) du véhicule en vue en plan, lesdits un ou plusieurs trous traversants (TH) chevauchent une portion centrale (Ra1) du réservoir de carburant (10) en vue en plan.

3. Véhicule à enfourcher selon la revendication 2, dans lequel
quand le réservoir de carburant (10) est divisé en trois portions égales en direction gauche-droite (LR) du véhicule en vue en plan, lesdits un ou plusieurs trous traversants (TH) ne chevauchent pas une portion gauche (Ra3) ou une portion droite (Ra2) du réservoir de carburant (10) en vue en plan.

4. Véhicule à enfourcher selon l'une quelconque des revendications 1 à 3, dans lequel
lesdits un ou plusieurs trous traversants (TH) incluent une pluralité de trous traversants (TH) agencés de manière dispersée dans le couvercle de réservoir (20).

5. Véhicule à enfourcher selon l'une quelconque des revendications 1 à 4, dans lequel l'orifice d'admission (39) inclut
une première zone d'ouverture (R1) qui chevauche une portion du réservoir de carburant (10) incluant une portion d'extrémité arrière du réservoir de carburant (10) en vue en plan, et
une deuxième zone d'ouverture (R2) qui est adjacente à la première zone d'ouverture (R1) et ne chevauche pas le réservoir de carburant (10) en vue en plan.

6. Véhicule à enfourcher selon l'une quelconque des revendications 1 à 5, comprenant en outre un élément de protection (70, 80) qui couvre au moins une partie de l'orifice d'admission (39) du filtre à air (30) à une position plus haute que l'orifice d'admission (39) du filtre à air (30).

7. Véhicule à enfourcher selon la revendication 6, dans lequel
une portion d'extrémité droite (71) de l'élément de protection (70) est située plus à droite que l'orifice d'admission (39) en vue en plan, et
une portion d'extrémité gauche (72) de l'élément de protection (70) est située plus à gauche que l'orifice d'admission (39) en vue en plan.

8. Véhicule à enfourcher selon la revendication 6 ou 7, dans lequel
l'élément de protection (70) comporte une portion de paroi avant (mp2), une portion de réception de liquide (mp1) et une portion de paroi arrière (mp3),
la portion de paroi avant (mp2) est formée pour se projeter vers le haut depuis une portion d'extrémité avant de la portion de réception de liquide (mp1) sur une certaine distance dans une section transversale verticale parallèle à la direction avant-arrière du véhicule (FB), et
la portion de paroi arrière (mp3) est formée pour se projeter vers le haut depuis une portion d'extrémité arrière de la portion de réception de liquide (mp1) d'une certaine distance dans la section transversale verticale parallèle à la direction avant-arrière du véhicule (FB).

9. Véhicule à enfourcher selon l'une quelconque des revendications 1 à 8, dans lequel
au moins un trou desdits un ou plusieurs trous traversants (TH) du couvercle de réservoir (20) présente une forme plane en vue en plan et une forme plane en vue latérale.

10. Véhicule à enfourcher selon l'une quelconque des revendications 1 à 9, dans lequel
au moins une partie de l'orifice d'admission (39) chevauche une portion du réservoir de carburant (10) en vue en plan, et
l'espace de transmission sonore (SS) s'étend en continu depuis l'orifice d'admission (39) du filtre à air (30) jusqu'auxdits un ou plusieurs trous traversants (TH) du couvercle de réservoir (20) tout en contournant ladite une portion du réservoir de carburant (10).
